# EUROPEAN PATENT SPECIFICATION

(11) **EP 0 368 184 B1**
(45) Date of publication and mention of the grant of the patent: **15.03.1995**
(21) Application number: 89120453.9
(22) Date of filing: 05.11.1989
(51) Int. Cl.: B28D 7/02, B23Q 11/10

(54) **Device for wet machining, particularly for cutting stone**
Anlage für die Nassbearbeitung, insbesondere zum Schneiden von Stein
Dispositif d'usinage sous arrosage, en particulier pour le découpage de la pierre

(30) Priority: 04.11.1988 IT 8367788
(43) Date of publication of application: 16.05.1990
(73) Proprietor: BREVETTI MONTOLIT S.P.A., I-21050 Cantello (Varese) (IT)
(72) Inventor: Casartelli, Luigi, I-21050 Cantello (Varese) (IT); Montoli, Ezio, I-21050 Cantello (Varese) (IT)
(74) Representative: Sassi, Romano

(56) References cited:
- DE-A- 3 619 296
- FR-A- 978 455
- US-A- 2 278 886
- US-A- 3 478 843

## Description

The invention relates to an, electric machine for wet, circular cutting, particularly for stones and the like, provided with devices to optimize loading and distribution of cooling liquid and for use of the table, with and without chariot as claimed in claim 1.

At the present state of the art electric cutting machine, for wet circular cutting, particularly for cutting stones and the like, providing vertical or bevelled cuts, so said "jolly", are provided with devices for loading and/or distributing of cooling liquid, which had drawbacks. Even regarding table control difficulties were encountered.

In particular, the cooling and antidust liquid, was filled in a reservoir or tank substantially stationary and embodied into the machine and the disk tool dipped, in it, leaving therein working scraps in the form of mud which frequently had to be removed, and the loss of water replaced. These operations, were troublesome and even the same supply of cooling and antidust liquid required an external container to supply it to said reservoir. Intermittent feeding were required, whereby the liquid level of the tool immersing pool changed from plenty provided by replenishment to lack requiring replenishment and this range was proportional to replenishment frequency. It was indeed known, as shown in US-A-2278886, DE=A1=3619296, FR-A-978455 and US-A-3478843, how to supply a liquid from a reservoir.only in quantities as used However none of such device disclosed an arrangement suitable for electric cutting machine, for wet circular cutting, particularly for cutting stones and the like. Moreover the liquid, wetting the revolving tool by centrifugal force spread all around, wetting surrounding object instead of being concentrated, on the disk tool, wherein are placed the surfaces needing its action.

Regarding the table and its spare parts, the conventional machines are usually provided with a fixed half table and with a tiltable half table wherein the tiltable half table is generally provided with a chariot, mounted substantially in a tiltable way, wherein the partial lifting, allow inlet to the underlaying room, for cleaning. The same chariot, from one side, is comfortable and useful, for slabs or tiles comprised in a strict range of sizes but on the other hand it represents a limitation for workings intended to exceed such range. Another drawback, occurring with tiltable tables, is of constructive nature, since it is very difficult set and adjust each time the prop length, in order that in every position of the table its planes are perfectly set. In tables including a chariot, which, as said, is mounted in a tiltable way, the guide therefore is provided only along one side, while on the opposite side, there is a wearing of engaging members and waste of energy.

The invention as claimed is intended to remedy these drawbacks. The inventors have conceived a wet, circular, electric machine, provided with devices to optimize loading and distribution of cooling liquid and for use of the table with and without chariot, wherein in connection with the device to optimize loading and distribution of cooling and antidust liquid a reservoir is provided, with a wide top opening, protected by a removable lid, for giving, substantially free access, for cleaning and removal of mud and the like from same reservoir. Filling of this reservoir take place automatically, from a removable tank for provision of cooling and antidust liquid, which is removably connected to the reservoir, in a simple way.

Since the latter tends spread by centrifugal force and disperse the same cooling and antidust liquid, in accordance with a preferred embodiment of the present invention, the bent plate protecting the disk tool and the user, from possible splashes and matters which may be projected by centrifugal force by the disk, e.g., pieces detaching from same, it is provided with a baffle and a frog, whereby the exceeding liquid, is sent back on the same disk. The operation of such a frog do not impede passage and working of any kind of slab or tile. The same support bearing said bent plate may be upset in order to remove it when encumbering; however after giving a consent. Regarding the movable half table, in accordance with a preferred embodiment of the present invention, it may be placed on each of two hinging different levels, depending wether a chariot is used, thus, with dimensional limitations, dictated thereby, and in case that it is wanted to get free therefrom, to operate substantially without dimensional limits. The same chariot may be upset substantially by 180^{º}, having supports and bushes provided with spheres, as well as an additional sleeve, adapted to allow ample excursion. Moreover, the same chariot is provided on the rear side, from the opposite side of the driving one, of a member substantially in the form of slide and is made of plastic material, i.e. having a low friction coefficient. Regarding the possibility of providing quickly and with care the machine setting, with respect to the tiltable table, suitable props comprised by two adjustable members, are provided.

One way of carrying out the invention is described in detail below with reference to drawings which illustrate only one specific embodiment, in which:.

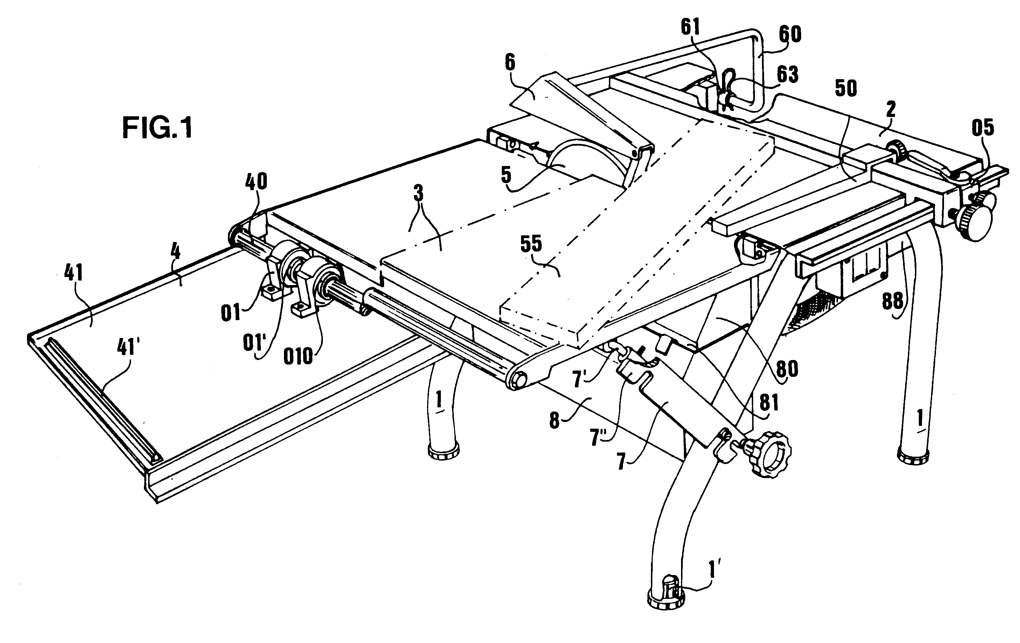

Figure 1 is a perspective view, of the machine, in the attitude to assume various positions, even in opposition. Thus, the movable and tiltable half table is shown, in the front side, without chariot and is mounted at a higher level to compensate the chariot thickness, wherein it may hold, at the same level of the fixed half table, a tile to be cut, while in the rear half table the same is shown as provided with a chariot, tilted by 180^{º}, i.e. in a most significant position and at a lower level, i.e. that corresponding to the plane of the fixed table, when the chariot, is not as shown, but as becoming.

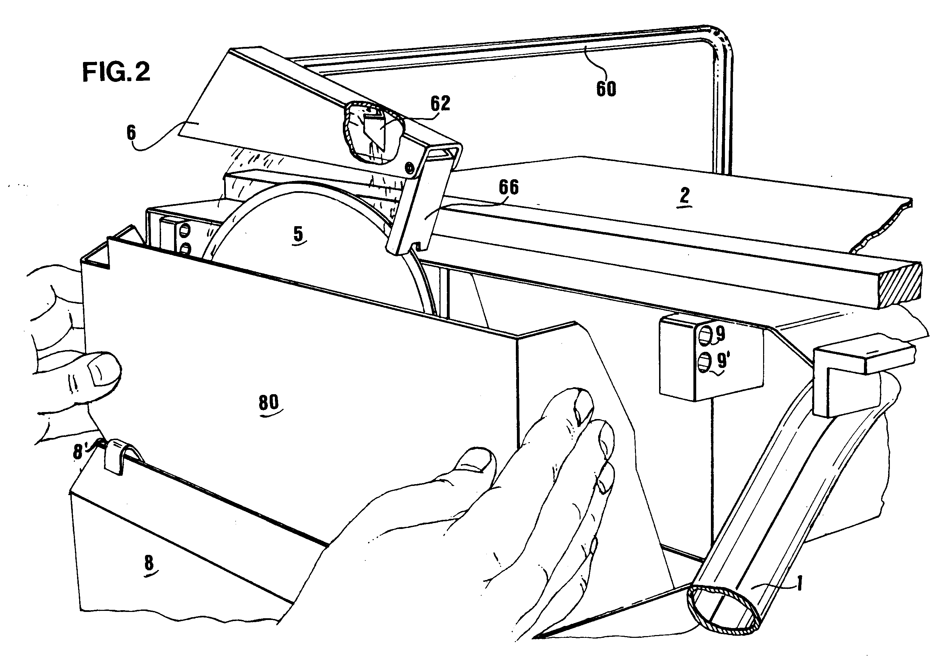

Figure 2 is a detailed perspective view, in an enlarged scale, of an important part of members controlling the cooling, while an user is beginning or ending the cleaning.

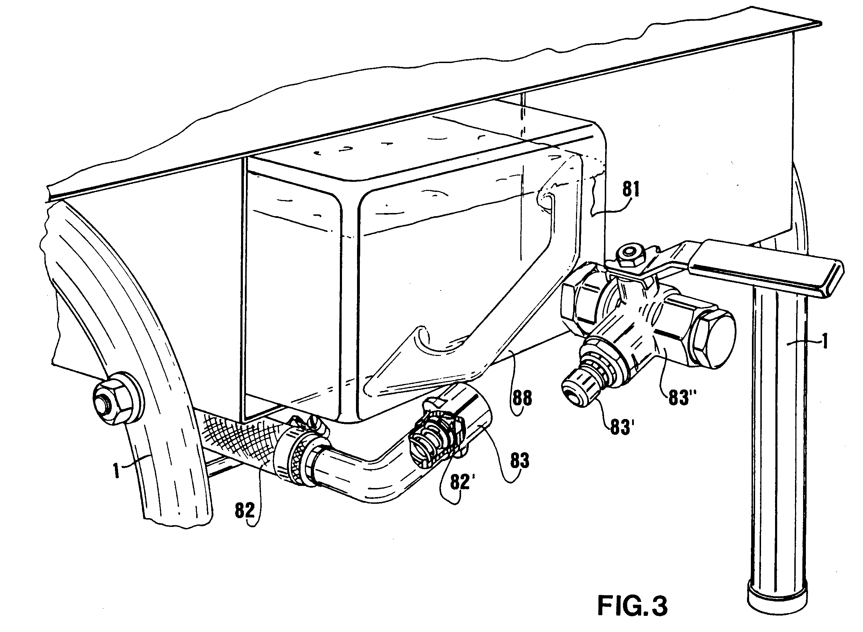

Figure 3 is a detailed perspective view, in an enlarged scale, of the remaining members controlling the cooling while the tank and its tap with coupling are in the attitude of being connected to a pipe having a disconnected coupling member, as partially shown in figure 2.

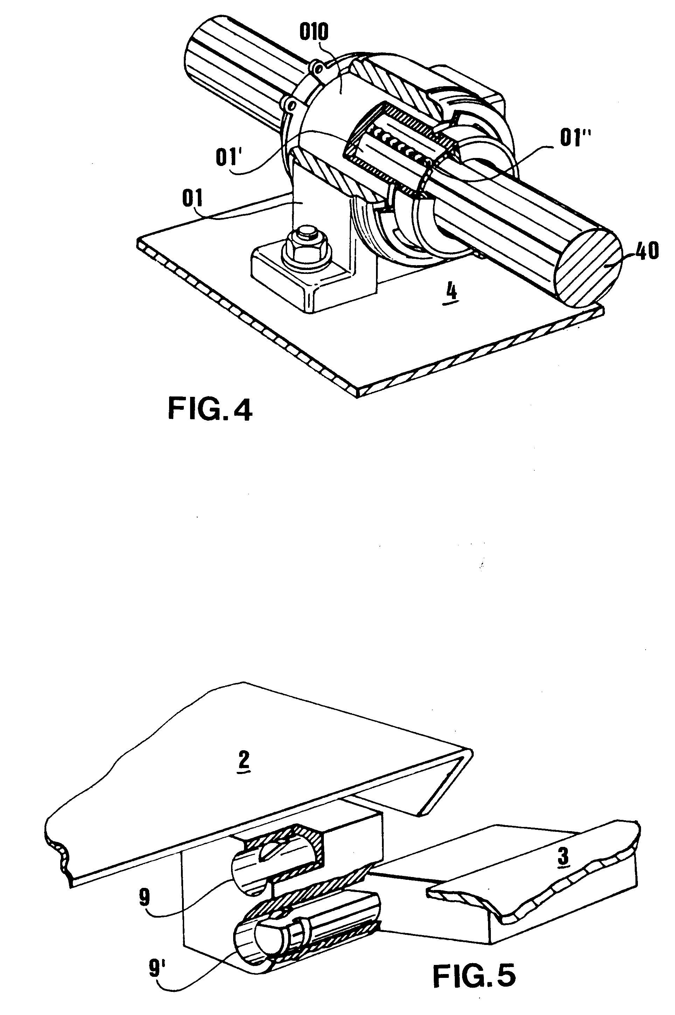

Figure 4 is a detailed perspective view, of one of two supports for tilting the chariot, particularly adapted to be turned by 180^{º}.
Figure 5 is a detailed perspective view, of one of the two double hinging supports, hindering the release of movable half table, during displacements from one to another level or within the same level from one to another inclination.

Referring now to figure 1 of the drawings, a wet, circular, electric machine, conventionally comprises a frame 1, having adjustable feet 1' provided with a fixed half table 2 and a movable half table 3, which may be tilted by at least 45^{º}, On the movable table 3 is slidably mounted a chariot 4, which bears mainly only on an outer longitudinal guide 40, which is parallel to tool disk 5. To protect the tool disk 5 and the user there is a cover or plate 6, projecting from the outer end of a long arm 60, which is hinged to a support 61. For holding up the movable table, when it is horizontal or tilted a strut 7 is provided, which is adjustable in at least two positions. The machine is additionally provided with a cooling system comprising at least a reservoir 8 and at least a cover 80. The conventional machine is as well provided with a set of squares and registers 50 at least one of which is is operable mechanically by hand.

In accordance with the present invention, the device to optimize loading and distribution of cooling and antidust liquid comprises a reservoir 8 to contain it, with a wide top opening 81, protected by a removable big lid 80, for giving, substantially free access, to it, for cleaning and removal of mud and the like. Filling of reservoir 8 take place automatically, from a removable tank 88, preferably transparent, for provision of antidust and cooling liquid 81 which, each time, is removably connected, through a pipe 82, including a valve 82', to the reservoir 8 in a simple way. In fact, the coupling 83, 83', placed respectively over the pipe 82 and over the tank 88, are provided with fast coupling means 83, 83' to join them together. Moreover, coupling 83' comprises also a valve 83'' to disconnect water flow 81 during manipulations. On the other hand, the coupling means are such that at least a valve 82', upon joining thereof 83, 83', opens automatically. The combination between the reservoir 8 and the tank 88 is such to provide an optimal level, substantially constant, in reservoir 8, wherein the disk tool 5 is immersed. Since the latter tends to be spread by centrifugal force and disperse the same antidust and cooling liquid, in accordance with a preferred embodiment of the present invention the bent plate 6, protecting the disk tool 5 and the user from possible splashes and matters projected by centrifugal force, is provided with a flap 62 and a frog 66, whereby the exceeding liquid 81 is sent back on the same disk 5. The operation of frog 66 is not such to impede any slab stone or tile 55 of any kind to be handled or worked, whereas it collects, centripetally, the cooling 81, on the circular blade tool 5 and on the cut being made (not shown). The same support 60, bearing said bent plate 6, may be upset, whereby it may be removed, but after having given a consent, e.g., by removing the split pin 63.

Regarding the tiltable half table 3, in accordance with a preferred embodiment of the present invention, it may be placed on each of two different hinging levels 9, 9', both in case that a chariot 4 is used, thus, with dimensional limitations dictated thereby, and in case that freedom to operate substantially without dimensional limits is aimed. The chariot 4 may be upset substantially by 180^{º}, having supports 01 and bushes 01' provided with spheres 01'', as well as an additional sleeve 010 adapted to provide ample angular movements (figure 1). Moreover, the same chariot 4 is provided, on the rear side, at 41, from the side opposite to that of drive 40, with a member substantially in the form of a slide 41' and is made of plastic material, i.e. with a low friction coefficient. In order to effect quickly and with care the machine setting with respect to the tiltable table 3, a suitable prop 7, comprised by two members 7', 7'' are provided which are adjustable. For continuous micrometric setting of at least one of the registers 50 provision is made of a mechanic eccentric device 05.

## Claims

1. Electric cutting machine, for wet circular cutting, particularly for stones and the like, comprising: at least a frame (1), a disc tool (5), cooled by soaking and driven by an electric motor, a cooling and antidust liquid reservoir (8), a bent plate (6) protecting the disc tool (5), a fixed half table (2), a movable half table (3), and a movable chariot (4), wherein said cooling and antidust liquid reservoir (8) is provided with a wide top opening (81), protected by a removable lid (80), for giving free access for cleaning and removal of mud and the like, said reservoir (8) being connected to a removable tank (88), preferably transparent, for provision of antidust and cooling liquid (81) which tank is removably connected by a pipe (82), including a valve (82'), to the reservoir (8) so that the level of the liquid in the reservoir remains constant.

2. Cutting machine, according to claim 1, characterized in that the coupling members (83, 83') placed respectively over the pipe (82) and over the tank (88) are provided with fast coupling means (83, 83'), wherein the coupling (83) comprises also a valve (83'') operable to disconnect the water flow (81) during manipulation.

3. Cutting machine, according to one or more of the preceding claims, characterized in that its coupling members (83, 83') include at least a valve (82') of the known kind, which automatically opens and closes respectively on connection and disconnection of coupling members (83, 83').

4. Cutting machine, according to one or more of the preceding claims, characterized in that the combination between the reservoir (8) and the tank (88) is such to provide an optimal level, substantially constant, in reservoir (8) wherein the disk tool (5) is immersed.

5. Cutting machine, according to one or more of the preceding claims, characterized in that the bent plate (6), protecting the disk tool (5) and the user from possible splashes and matters projected by centrifugal force, is provided with a flap (62) and a frog (66) whereby the exceeding liquid (81) is sent back to same disk (5).

6. Cutting machine, according to one or more of the preceding claims, characterized in that the support arm (60), bearing said bent plate (6) is connected to a fixed support (61) of the machine frame by a split pin (63) whose removal provide the consent for upsetting of support arm (60) and its bent plate (6).

7. Cutting machine, according to one or more of the preceding claims, characterized in that the tiltable half table (3), is connectable to the fixed half table by a pair of bayonet couplings, whose fixed support members are provided each with two vertically spaced receiving seat (9, 9''), whereby the tiltable half table (3) may be placed on each of two different hinging levels (9, 9'), both in case that a chariot (4) is used, thus with dimensional limitations dictated thereby, and in case that it is wanted to get free therefrom, to operate substantially without dimensional limits.

8. Cutting machine, according to one or more of the preceding claims, characterized in that the chariot (4) includes supports (01) each having a bush (01') provided with spheres (01'') as well as an additional sleeve (010) adapted to provide angular movements substantially in the order of 180^{º},.

9. Cutting machine, according to one or more of the preceding claims, characterized in that said chariot (4) is provided on the rear side (at 41), from the side opposed to that of driving (40), with a member substantially in the form of slide (41') which is made of plastic material or the like, having a low friction coefficient.

10. Cutting machine, according to one or more of the preceding claims, characterized by props (7) comprised each by two telescope extensible members (7', 7'') capable of being adjusted each other for setting the tiltable table (3), in three predetermined positions.corresponding to each of tree depressions provided in one of its members.

11. Cutting machine, according to one or more of the preceding claims, characterized in that for micrometric continuous setting of at least one of the registers (50) an additional mechanic eccentric device (05) is provided, comprising a clamping support and a swingable eccentric controllable by a handle, said clamping support being shiftable along the same guide controlling the registers (50)

## Patentansprüche

1. Elektrische Schneidmaschine, zum Naßkreisschneiden, insbesondere für Steine und dergleichen, umfassend: wenigstens einen Rahmen (1), ein tauchgekültes und durch einen Elektromotor angetriebenes Scheibenwerkzeug (5), ein Reservoir (8) für eine Kühl- und Antistaubflüssigkeit, ein das Scheibenwerkzeug (5)schützendes gekantetes Blech (6), einen fixen Halbtisch (2), einen beweglichen Halbtisch (3) und einen beweglichen Schlitten (4), wobei das Reservoir (8) für die Kühl- und Antistaubflüssigkeit, mit einer durch einen entfernbaren Deckel (80) geschützten, weiten oberen Öffnung (81) für den freien Zutritt zum Reinigen und zur Entfernung von Schlamm und dergleichen versehen ist, wobei das Reservoir (8) mit einem entfernbaren, vorzugsweise durchsichtigen Tank (88) für die Versorgung mit Antistaub- und Kühlflüssigkeit (81) verbunden ist, welcher Tank abnehmbar über ein Rohr (82), enthaltend ein Ventil (82'), an das Reservoir (8) angeschlossen ist, so daß das Flüssigkeitsniveau im Reservoir konstant bleibt.

2. Schneidmaschine nach Anspruch 1, dadurch gekennzeichnet daß die Kupplungsglieder (83, 83'), die über dem Rohr (82) bzw über dem Tank (88) angeordnet sind, mit Schnellkupplungseinrichtungen (83, 83') versehen sind, wobei die Kupplung (83) auch ein Ventil (83'') umfaßt, welches betätigbar ist, um den Wasserfluß (81) während der Manipulation zu unterbrechen.

3. Schneidmaschine nach einem oder mehreren der vorhergehenden Ansprüche, dadurch gekennzeichnet, daß die Kupplungsglieder (83, 83') wenigstens ein Ventil (82') bekannter Art aufweisen, welches bei Anschluß bzw. Abschluß von Kupplungsgliedern (83, 83') automatisch öffnet bzw, schließt.

4. Schneidmaschine nach einem oder mehreren der vorhergehenden Ansprüche, dadurch gekennzeichnet, daß die Kombination zwischen dem Reservoir (8) und dem Tank (88) derart ist, daß ein optimales, im wesentlichen konstantes Niveau im Reservoir (8), in welches das Scheibenwerkzeug (5) eingetaucht ist, geschaffen wird.

5. Schneidmaschine nach einem oder mehreren der vorhergehenden Ansprüche, dadurch gekennzeichnet, daß die gekantete Platte (6), die das Scheibenwerkzeug (5) und den Benützer vor möglichen, durch die Zentrifugalkraft weggeschleuderten Spritzern und Material schützt, mit einer Flap (62) und einer Klappe (66) versehen ist, wodurch die überschüssige Flüssigkeit (81) zur Scheibe (5) selbst rückgeführt wird.

6. Schneidmaschine nach einem oder mehreren der vorhergehenden Ansprüche, dadurch gekennzeichnet, daß der Stützarm (60), welcher die gekantete Platte (6) trägt, mit einer fixen Halterung (61) des Maschingestells mittels eines Splints (63) verbunden ist, dessen Entfernung die Freigabe zum Umlegen des Stützarmes (60) und seiner gekanteten Platte (6) bewirkt.

7. Schneidmaschine nach einem oder mehreren der vorhergehenden Ansprüche, dadurch gekennzeichnet, daß der kippbare Halbtisch (3) mit dem fixen Halbtisch durch ein Paar von Bajonettkupplungen verbunden ist, von denen jeder fixe Halteteil mit zwei vertikal im Abstand liegenden Aufnahmesitzen (9, 9') versehen ist, wobei der kippbare Halbtisch (3) an jedes von zwei verschiedenen Anlenkniveaus (9, 9') anbringbar ist, sowohl für den Fall, daß ein Schlitten (4) verwendet wird, somit mit den dadurch festgelegten Dimensionsbegrenzungen, als auch für den Fall,daß man dies umgehen will, um im wesentlichen ohne Dimensionsbegrenzungen zu arbeiten.

8. Schneidmaschine nach einem oder mehreren der vorhergehenden Ansprüche, dadurch gekennzeichnet, daß der Schlitten (4) Halterungen (01) aufweist, von denen jede eine mit Kugeln (01'') versehene Buchse (01') sowie eine zusätzliche Lagerhülse (010) zur Ermöglichung von Winkelbewegungen von in, wesentlichen der Größenordnung von 180° besitzt.

9. Schneidmaschine nach einem oder mehreren der vorhergehenden Ansprüche, dadurch gekennzeichnet, daß der Schlitten (4) an der hinteren Seite (bei 41), von der zur Seite des Antriebs (40) entgegengesetzten Seite aus mit einem Teil von im wesentlichen der Form einer Schiene (41') versehen ist, die aus Kunststoffmaterial oder dergleichen, welches einen niedrigen Reibungskoeffizienten hat, besteht.

10. Schneidmaschine nach einem oder mehreren der vorhergehenden Ansprüche, gekennzeichnet durch Stützen (7), jeweils bestehend aus zweiausziehbaren Teleskopteilen (7, 7'), die gegenseitig verstellbar sind, um den kippbaren Tisch (3) in drei vorbestimmten Stellungen, entsprechend einer jeden von drei in einem von seinen Teilen ausgebildeten Kerben, einzustellen.

11. Schneidmaschine nach einem oder mehreren der vorhergehenden Ansprüche, dadurch gekennzeichnet, daß für die mikrometrische kontinuierliche Einstellung vonwenigstens einem der Richtstäbe (50) eine zusätzliche mechanische Exzentervorrichtung (05) vorgesehen ist, die eine Klemmhalterung und einen durch einen Handgriff steuerbaren schwenkbaren Exzenter aufweist, wobei die Klemmhalterung entlang derselben Führung, welche die Richtstäbe (50) führt, verschiebbar ist.

## Revendications

1. Machine électrique à couper, pour couper à humide circulairement, particulièrement pour des pierres et des produits similaires pareil, comprenant au moins un cadre (1), un outil (5) à disque refroidi par immersion et actionné par un moteur électrique, un réservoir (8) pour un liquide de refroidissement et antipoussière, une tôle (6) à tuile de protection de l'outil à disque, une demi-table (2) fixe, une demi-table (3) movible et un chariot (4) mobile, le réservoir (8) pour le liquide de refroidissement et antipoussière etant pourvu d'une large ouverture (81) supérieure, protégée par un couvercle (80) enlevable, pour permettre de nettoyer facilement et enlever la boue et de pareil, ledit réservoir (8) étant joint à un récipient (88) enlevable, préférablement transparent, pour la fourniture de liquide (81) antipoussière et de refroidissement, ledit récipient étant joint mais séparable par une tuyau (82), comprenant une soupape (82'), au réservoir (8), pour que le niveau du liquide dans le réservoir reste constant.

2. Machine à couper, selon la revendication 1, caractérisée en ce que les membres de raccordement (83,83'),positionnés respectivement au dessus du tube (82) et du récipient (88), sont pourvus de moyens (83,83') de raccordement rapide, le raccordement (83) comprenant aussi une soupape (83''), qui peut être actionnée pour arrêter le flux (81) d'eau pendant les manipulations.

3. Machine à couper, selon une ou plusieures revendications précédentes, caractérisée en ce que ses membres (83,83') de raccordement comprennent au moins une soupape (82') du type connu, qui ouvre et ferme respectivement lors de la connexion et du dégagement des membres (83,83') de raccordement.

4. Machine à couper, selon une ou plusieures revendications précédentes, caractérisée en ce que la combinaison entre le reservoir (8) et le récipient (88) est telle qu'elle pourvoit un niveau optimal, essentiellement constant, dans le réservoir (8), dans lequel se plonge l'outil (5) à disque.

5. Machine à couper, selon une ou plusieures revendications précédentes, caractérisée en ce que la tôle (6) à tuile de protection de l'outil à disque et l'usager contre des giclées et des morceaux de matériaux éventuellement projectés par la force centrifuge, est pourvue d'un déflecteur (62) et d'un penchant(66), qui acheminant l'excédent de liquide (81) à nouveau sur le disque (5).

6. Machine à couper, selon une ou plusieures revendications précédentes, caractérisée en ce que le bras-support (60), portant ladite tôle (6) à tuile, est jointe à un support (61) fixe du cadre de la machine par une goupille (63) l'enlèvement de laquelle represente le consentement à enlever le bras (60) - support et la tôle (6) à tuile.

7. Machine à couper, selon une ou plusieures revendications précédentes, caractérisée en ce que la demi-table (3) basculante peut être jointe à la demi-table fixe par une paire de raccordements à baïonnette, dont chaque membre de support fixe est pourvu de deux logements (9,9') de réception prévus verticalement espacés, c'est pourquoi la demi-table (3) basculante peut être placée à chacun de deux différents niveaux (9,9') d'articulation,soit dans le cas d'emploi d'un chariot (4), avec les limitations dimensionnels partant entraînées, soit dans le cas où on veut s'en libérer, pour pouvoir opérer essentiellement sans aucun limitation dimensionnelle.

8. Machine à couper, selon une ou plusieures revendications précédentes, caractérisée en ce que le chariot (4) comprend des supports (01), chacun desquels ayant un manchon (01') à billes (01'') ainsi que une douille (010) additionnelle apte à permettre des mouvements angulaires essentiellement de l'ordre de 180°.

9. Machine à couper, selon une ou plusieures revendications précédentes, caractérisée en ce que le chariot (4) est pourvu sur le côté derrière (à 41), sur le côté opposé à celui de l'actionnement (40), d'un membre essentiellement en forme d'une glissière (41'), en matière plastique ou en un produit similaire qui, a un coefficient de friction bas.

10. Machine à couper, selon une ou plusieures revendications précédentes, caractérisée par des appuis (7), chacun composé de deux membres (7,7'') télescopiques extensibles, qui pouvant être ajustés mutuellement pour mettre la table (3) basculant en trois positions prédéterminées correspondantes à chacune de trois rainures pourvues dans l'un de ses membres.

11. Machine à couper, selon une ou plusieures revendications précédentes, caractérisée en ce que un dispositif (05) mécanique excentrique additionnel est pourvu pour l'ajustage micrométrique continu de au moins un des règles (50), lequel dispositif (05) comprend, un support de serrage et un excentrique pivotant qui peut être actionné par une poignée, ledit support de serrage pouvant rouler le long du même guidage qui guide les règles (50).
